# EUROPEAN PATENT SPECIFICATION

(11) **EP 1 106 025 B1**
(45) Date of publication and mention of the grant of the patent: **27.02.2002**
(21) Application number: 98966695.3
(22) Date of filing: 22.12.1998
(51) Int. Cl.: H04Q 7/24, H04Q 7/32

(54) **METHOD FOR PROVIDING INTELLIGENT NETWORK SUPPORT TO A MOBILE SUBSCRIBER**
VERFAHREN ZUR BEREITSTELLUNG VON INTELLIGENTER NETZWERKUNTERSTÜTZUNG FÜR EINEN MOBILEN TEILNEHMER
PROCEDE PERMETTANT D'ASSURER UN SUPPORT RESEAU INTELLIGENT A UN ABONNE MOBILE

(30) Priority: 11.08.1998 EP 98810773
(43) Date of publication of application: 13.06.2001
(73) Proprietor: Swisscom Mobile AG, 3050 Bern (CH)
(72) Inventor: HUBER, Adriano, CH-6600 Locarno (CH)
(74) Representative: BOVARD AG - Patentanwälte
(86) International application number: EP9808529
(87) International publication number: WO0010352

(56) References cited:
- EP-A- 0 693 859
- WO-A-97/35450
- WO-A-98/25426
- WO-A-98/33343

## Description

The invention concerns a method for offering at least some intelligent network (IN) support to subscribers of a telecommunication network roaming in a visited network, as well as new means used for this method.

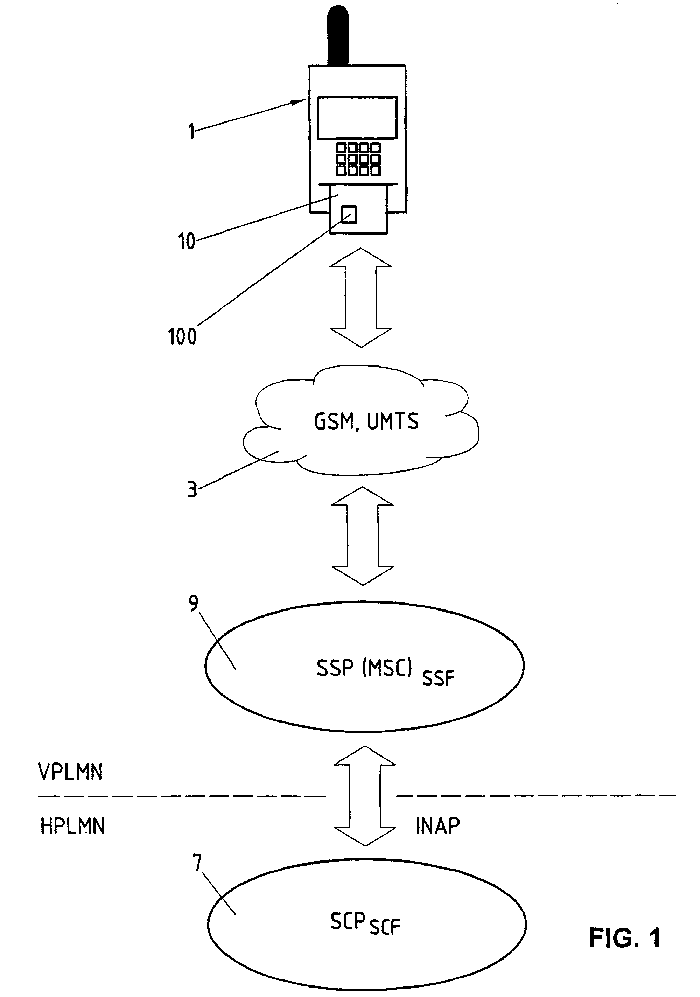

It is already known that various services such as VPN (Virtual Private Networks) and PNP (Private Numbering Plan) can be provided by intelligent networks. Figure 1 shows a conventional intelligent network. Reference 1 denotes mobile equipment, e.g. a mobile phone, of a mobile subscriber. An identification module 10, e.g. a SIM-Card, is connected with the mobile equipment for identifying the subscriber in the network. The identification module comprises processing and storage means 100.

The mobile subscriber is registered in his home public land mobile network (HPLMN) and is shown in Figure 1 roaming in a visited network VPLMN, in this case a conventional GSM or UMTS network 3. The network 3 comprises mobile switching center (MSC) 9, denoted as Service Switching Points (SSPs) if they support Service Switching Functions (SSF). A signalling relationship is established between the SSFs and a Service Control Function (SCF) in a central platform 7, usually denoted as a Service Control Point (SCP) and managed by the operator of the HPLMN of the mobile subscriber. The signalling between the SSP and the SCP may use, for example, INAP messages (intelligent network application part). The execution of the service (for example the parameters of a call setup) is remotely controlled by service logic running in the central SCP 7.

In the prior art, intelligent network services are invoked and interacted with by means of the service switching functions and trigger conditions in the service profiles in the switches 9. In a GSM or UMTS mobile network this technology is denoted as Customised Application Mobile service Execution Logic (CAMEL).

The patent application WO 98/25426 describes a method and system which allows a user of a mobile telephone to use a certain intelligent network (IN) service regardless of whether the network he is currently connected can support said certain services. According to WO 98/25426 the MSC to which the user is currently logged in detects when the user sets up a call for which an IN service is needed and sends an IN service request to a SCP in the home network of the user. If additional information from the customer is needed the SCP communicates directly with the mobile telephone of the user via USSD messages. The SCP acts on the messages received and sends a service response to the MSC the customer is currently logged in to and the MSC acts on the service response by e.g. setting up a call. The system allows data to be transmitted directly between the SCP and the user except for the initial and final stages where IN support is needed by the MSC the customer is currently logged in to.

The patent application WO 98/33343 describes a subscriber identity module (SIM-card) in a mobile station and a method for performing smart card functions with this SIM card. Diversified service combinations may be implemented in the SIM card and may be used via the mobile station. A feature characteristic of this service combinations is that part of the series of actions is carried out in the SIM card. The SIM card is therefore equipped with a processing device.

The patent application WO 98/35450 describes an intelligent mobile station for use in a cellular telecommunications network that combines a mobile station component with a service component in a single functional unit that stores and executes intelligent network (IN) services. The system allows cellular subscribers to program their mobile stations to define and implement customized subscriber services.

This prior art solution has the following disadvantages for subscribers of a HPLMN roaming in a visited network VPLMN:
- The intelligent network services can only be invoked if the VPLMN-operator has provided the SSF infrastructure with the associated large amount of processing power and memory required in that infrastructure. Currently, many network operators do not provide service switching functions in the switches 9. Consequently, even if there is a roaming agreement between the HPLMN and the VPLMN, it is usually not possible to invoke IN-services from a visited network.
- The direct access to the VPLMN infrastructure will require sophisticated commercial agreements and solutions for the security between the HPLMN and the VPLMN.

It is one goal of the invention to provide for a new method for providing IN Support to users of a telecommunication network, especially to subscribers of a telecommunication network roaming in a foreign network, that overcomes at least some of the drawbacks of the prior art methods.

According to the invention, these goals are achieved by a method comprising all the features of claim 1, and by means comprising all the features of claim 12.

In a preferred embodiment, these goals are achieved by using standard signalling messages in the visited network and using service logic running in the mobile equipment or in the SIM card of the subscriber.

The mobile equipment can be a mobile phone, a palmtop, a PDA, etc.., or just a smart card also used for identifying a subscriber in a telecommunication or computer network.

In a preferred embodiment, the telecommunication network is a GSM or UMTS network, the signalling messages are standard USSD or SMS messages, and the service logic is running in a mobile phone or in the SIM-Card of the user, according to the SIM Application Toolkit (GSM 11.14).

The invention will be better understood with the help of the following description of a preferred embodiment and of the annexed drawings that show:

Figure 1 a prior art intelligent network.

Figure 2 an intelligent network according to the invention.

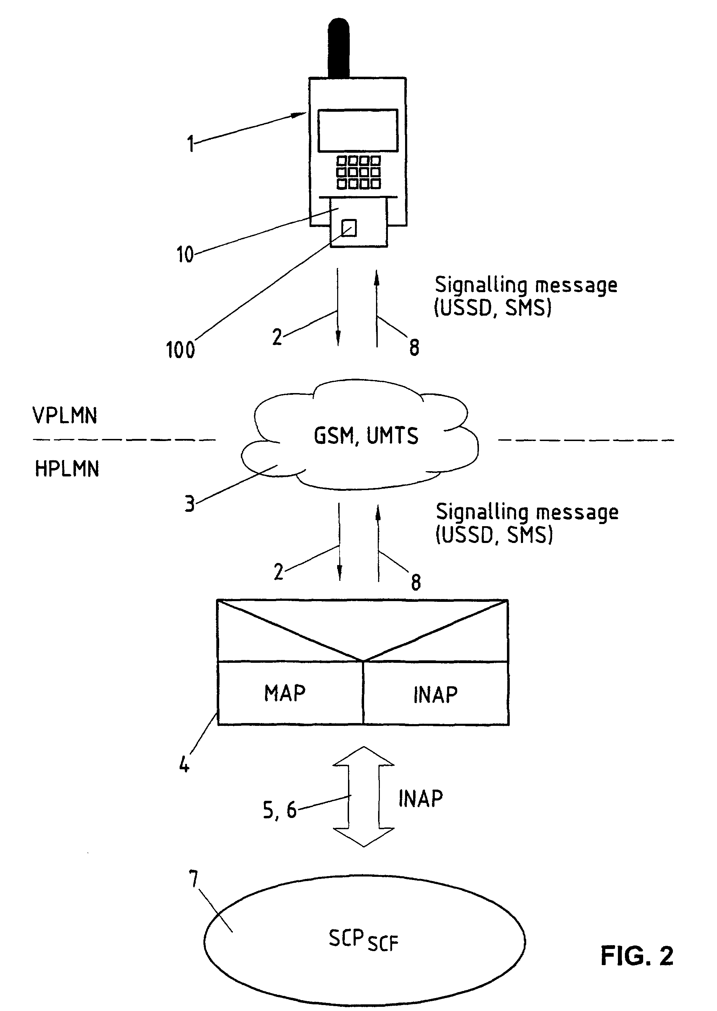

The figure 2 shows the main components of an IN-network according to a preferred embodiment of the invention; identical features are denoted with the same references in Figures 1 and 2.

According to the invention, at least a subset of the service switch functions (SSF) usually performed by the switches 9 is performed in the mobile equipment 1 and/or in the SIM-card 10 of the mobile subscriber. The relevant information of the dialogue (e.g. of the INAP dialogue) between the SSP 9 and the SCP 7 is mapped in short data messages, e.g. in SMS (short message system), USSD (unstructured supplementary services data), GPRS or IP messages, 2, 8 exchanged between the mobile equipment 1 or the chip-card 10 and an interworking unit 4 managed by the operator of the HPLMN. The interworking unit 4 acts as a service switching point SSP, and interacts with a central platform 7, e.g. with a SCP or with any service control platform (e.g. Java-based servers, Webservers, Corba platform, etc.). The interworking unit can be implemented physically in the same server as the central platform 7 or in another server.

This invention can be used to provide any kind of services to the subscriber, but more specifically for services of the Intelligent Network service type (eg. for Private Numbering Plans).

A software module in the SIM-Card 10 (e.g. a GSM-Card with the SIM Application Toolkit, or a JAVA or OpenCard Identification Card) and/or in the Mobile Equipment 1 (e.g. in a Java terminal) recognises some events generated by the subscriber or in the network 3. The invention does not depend on the kind of events being intercepted; the software module can, for example, intercept specific digits being dialled, specific patterns in the digits, specific keyboard buttons selected on the user interface, digits dialled during a call, selection of a menu point, busy or unanswered calls, etc. The software module can by example detect from the pattern of the dialled digits (e.g. if only 4 or 5 digits are dialled) that the call is directed to a virtual private number VPN.

If the software module recognises that the intercepted event corresponds to a SSF function not supported by the visited network (VPLMN) or by the responsible MSC in the HPLMN, it sends a message, e.g. a SMS or USSD data message, or a GPRS or IP-packet, to an interworking unit 4, requesting a specific service - e.g. a translation of the dialled number. The interworking unit 4 acts as a SSP and sends an initial message 5 to a central platform, e.g. to the SCP 7, in the HPLMN of the mobile subscriber. The SCP 7 replies - among others - with a message 6 containing the requested information or service, e.g. the translated number. Messages between the interworking unit 4 and the SCP 7 can be exchanged according to the INAP protocol, or to any adapted protocol, e.g. RMI, CORBA, HTTP, XML, etc.

Before preparing and sending a signalling message 2 to the interworking unit 4, the software module in the SIM-card 10 or in the mobile equipment 1 can check the temporary location information stored in the SIM-card. A signalling message is sent only if said temporary location information indicates that the mobile subscriber is not registered with a network providing SSP 9 and a commercial agreement with the HPLMN of the mobile subscriber. In a various embodiment, a signalling message is prepared in any case when some events are detected, even if the mobile subscriber is registered in his HPLMN. In still another embodiment, a signalling message is sent only if the location information stored in the SIM-card 10 indicates that the mobile subscriber is registered with his HPLMN or with a VPLMN registered in a list stored in said SIM-card, wherein said list contains the mobile network codes of at least a subset of all networks providing service switching functions to the user of the SIM-card.

The interworking unit 4 receives the message 6 from the SCP 7, extracts the relevant information from that message (e.g. a translated number), and sends this information to mobile equipment 1 and/or to the SIM Application in the SIM-card 10 via a short message 8 (USSD, SMS, GPRS or IP). The mobile equipment 1 (possibly so instructed by the SIM-Card 10) then performs the desired function, e.g. sets up a call to the translated number.

In order to keep the protocol between the interworking unit 4 and the Service Control Function correct, the interworking unit simulates the SSP 9, and signals to the SCP 7 a termination of the call.

Thus, the provider of the HPLMN can extend VPN and other IN-Services to VLPMNs that do not yet support CAMEL or SSF.

## Claims

1. Method for providing intelligent network support to a mobile subscriber roaming in a VPLMN (visited public land mobile network) that does not provide SSF (Service Switching Functions) to this mobile subscriber, comprising:
recognising by the SIM-card (10) or by a function in the mobile equipment (1) of said mobile subscriber when intelligent network support is requested;
preparing a signalling message (2) by the SIM-card (10) or by a function in the mobile equipment (1) of said mobile subscriber;
sending said signalling message (2) to an interworking unit (4) which interworking unit (4) interacts with a SCP (service control point) (7) of the mobile subscriber's HPLMN (home public land molile network);
preparing one or several messages (5) in said interworking unit (4), which messages (5) depend on said signalling message (2) received;
sending said messages (5) to said SCP (7);
said SCP (7) replying with a message (6) containing the requested information or service;
said interworking unit (4) extracting the relevant information from said message (6) received from the SCP (7); and
sending said information via a signalling message (8) to said mobile equipment (1) and/or to said SIM-card (10).

2. Method according to claim 1, wherein said messages (5) prepared in said interworking unit (4) and/or said messages (6) received from said SCP (7) are INAP (intelligent network application part) messages and/or CORBA messages and/or RMI messages and/or HTTP messages and/or XML messages.

3. Method according to one of the preceding claims, wherein said signalling messages (2) prepared by said SIM-card (10) or by said function in said mobile equipment (1) and/or said signalling messages (8) sent to said mobile equipment (1) and/or to said SIM-card (10) are USSD (unstructured supplementary services data) messages and/or SMS (short message service) messages and/or GPRS messages and/or IP (internet protocol) packets.

4. Method according to one of the preceding claims, **characterised in that** said interworking unit (4) can signal to said SCP (7) some events other than said mobile subscriber or network generated events.

5. Method according to the preceding claim, **characterised in that** said interworking (4) unit signals to said SCP (7) the termination of a call from said mobile subscriber.

6. Method according to one of the preceding claims, wherein said SIM-card (10) or mobile equipment (1) recognises when a request for call establishment should be directed to a SCP (7).

7. Method according to the preceding claim, comprising :
intercepting events generated by the mobile subscriber;
recognising when the call is directed to a virtual private number;
preparing and sending a signalling message (2) containing said number to said interworking unit (4).

8. Method according to the preceding claim, **characterised by** recognising that the call is to a virtual private number when only a predefined number of digits are dialled and/or when a specific pattern of digits is dialled.

9. Method according to one of the preceding claims, **characterised by** checking the temporary location information stored in the SIM-card (10) before preparing and sending a signalling message (2) to said interworking unit (4).

10. Method according to the preceding claim, **characterised by** checking if said temporary location information indicates that the mobile subscriber is registered with a PLMN (public land mobile network) providing SSP (service switching points) (9) and a commercial agreement with the HPLMN of the mobile subscriber.

11. Method according to one of the preceding claims, **characterised in that** said mobile equipment (1) performs the desired function upon reception of said signalling message (8).

12. Means for providing intelligent network support to a mobile subscriber roaming in a VPLMN (visited public land mobile network), said means comprising processing means (4, 7), mobile equipment for use in said VPLMN and a SIM-card (10) which can be used with said mobile equipment (1) for identifying said mobile subscriber, **characterised in that**
the mobile equipment (1) and/or the SIM-card (10) comprise means for recognising when intelligent network support is requested and **in that** case for preparing and sending a signalling message (2) to the processing means (4, 7);
said processing means (4, 7) comprise an interworking unit (4) for receiving said signalling message (2) sent from said mobile equipment and/or said SIM-card (10), for preparing one or several messages (5), which messages (5) depend on said signalling message (2) received, for sending said messages (5) to a SCP (service control point) (7) of the mobile subscriber's HPLMN (home public land mobile network) which SCP (7) replies with a message (6) containing the requested information or service, for extracting the relevant information from said message (6) received from said SCP (7), and for sending said information via a signalling message (8) to said mobile equipment (1) and/or to said SIM-card (10).

13. Means according to claim 12, wherein said signalling messages (2) sent from said mobile equipment (1) and/or from said SIM-card (10) and/or said signalling messages (8) sent to said mobile equipment and/or to said SIM-card (10) are USSD (unstructured supplementary services data) messages and/or SMS (short message service) messages and/or GPRS messages and/or IP (internet protocol) packets.

14. Means according to claim 12 or 13, wherein said messages (5) sent to said SCP (7) and/or said messages (6) received from said SCP (7) are INAP (intelligent network application part) messages and/or CORBA messages and/or RMI messages and/or HTTP messages and/or XML messages.

15. Means according to one of the claims 12 to 14, wherein said SCP (7) and said interworking unit (4) are on the same server.

16. Means according to one of the claims 12 to 15, wherein said interworking unit (4) comprises means for signalling to said SCP (7) some events other than said mobile subscriber or network generated events.

17. Means according to the preceding claim, **characterised in that** said interworking unit (4) comprises means for signalling to said SCP (7) the termination of a call from said mobile subscriber.

18. Means according to one of the claims 12 to 17, wherein at least a subset of the service switch functions (SSF) is performed in the mobile equipment (1) and/or in the SIM-card (10) of the mobile subscriber.

19. Means according to the preceding claim, wherein said processor (100) and/or said mobile equipment (1) can intercept the call digits selected by the mobile subscriber, recognise when the call is directed to a VPN (virtual private number), and then prepare and send a said signalling message (2) to said interworking unit (4).

20. Means according to the preceding claim, wherein said processor (100) and/or the mobile equipment (1) can recognise that the call is directed to a VPN when only a limited number of digits are dialled and/or when a specific pattern of digits is dialled.

21. Means according to one of the claims 12 to 20, wherein a said signalling message (2) is prepared and sent by the SIM-card (10) and/or by the mobile equipment (1) only if said VPLMN does not provide the service switching function requested.

22. Means according to the preceding claim, wherein a signalling message (2) is prepared and sent by the SIM-card (10) and/or by the mobile equipment (1) to said interworking unit (4) only if the temporary location information stored in the SIM-card (10) meets certain criteria.

23. Means according to the preceding claim, wherein a signalling message (2) is not prepared and not sent by the SIM-card (10) and/or by the mobile equipment (1) to said interworking unit (4) if said temporary location information indicates that the mobile subscriber is registered with his HPLMN or with a VPLMN registered in a list stored in said SIM-card (10).

24. Means according to the preceding claim, wherein said list contains the mobile network codes of at least a subset of all networks providing service switching functions to the user of the SIM-card (10).

## Patentansprüche

1. Verfahren zum Erzeugen einer intelligenten Netzwerkunterstützung für einen mobilen Abonnenten, der sich in einem fremden Mobilfunknetz (VPLMN) umherbewegt, welches Mobilfunknetz (VPLMN) keine Service Switching Funktionen (SSF) für diesen mobilen Abonnenten aufweist, umfassend:
Erkennen mittels einer SIM-Karte (10) oder einer Funktion im Mobilfunkgerät (1) des genannten mobilen Abonnenten, wenn intelligente Netzwerkunterstützung angefordert wird;
Vorbereiten einer Signalmessage (2) durch die SIM-Karte (10) oder durch eine Funktion im Mobilfunkgerät (1) des genannten mobilen Abonnenten;
Senden der genannten Signalmessage (2) zu einer Vermittlungseinheit (4), welche Vermittlungseinheit (4) mit einem Service Control Point (7) des Heimmobilfunknetzes (HPLMN) des mobilen Abonnenten wechselwirkt;
Vorbereiten eines oder mehrerer Messages (5) in der genannten Vermittlungseinheit (4), welche Messages (5) auf der genannten, erhaltenen Signalmessage (2) basieren;
Senden der genannten Messages (5) zum genannten Service Control Point (7);
Antworten des genannten Service Control Points (7) mit einer Message (6), welche die angeforderte Information umfasst;
Extrahieren der relevanten Information der genannten Message (6), die vom Service Control Point (7) erhalten wurde, durch die genannte Vermittlungseinheit (4); und
Senden der genannten Information über eine Signalmessage (8) zum genannten Mobilfunkgerät (1) und/oder zur genannten SIM-Karte (10).

2. Verfahren nach Anspruch 1, wobei die genannten Messages (5), die in der genannten Vermittlungseinheit (4) vorbereitet wurden, und/oder die genannten Messages (6), die vom genannten Service Control Point (7) erhalten wurde, INAP-Messages und/oder CORBA-Messages und/oder RMI-Messages und/oder http-Messages und/oder XML-Messages sind.

3. Verfahren nach einem der vorhergehenden Ansprüche, wobei die genannten Signalmessages (2), die durch die genannte SIM-Karte (10) oder durch eine genannte Funktion im Mobilfunkgerät (1) vorbereitet wurden, und/oder die genannten Messages (8), die zum genannten Mobilfunkgerät (1) und/oder zur genannten SIM-Karte (10) geschickt wurden, USSD-Messages und/oder SMS-Messages und/oder GPRS-Messages und/oder IP-Datenpakete sind.

4. Verfahren nach einem der vorhergehenden Ansprüche, **dadurch gekennzeichnet, dass** die genannte Vermittlungseinheit (4) andere Signal als die durch den genannten mobilen Abonnenten oder das Netzwerk erzeugten Signale zum genannten Service Control Point (7) schickt.

5. Verfahren nach einem der vorhergehenden Ansprüche, **dadurch gekennzeichnet, dass** die genannte Vermittlungseinheit (4) die Beendigung eines Telefonanrufs des genannten mobilen Abonnenten zum genannten Service Control Point (7) signalisiert.

6. Verfahren nach einem der vorhergehenden Ansprüche, wobei die genannte SIM-Karte (10) oder das genannte Mobilfunkgerät (1) erkennt, wann eine Anforderung für einen Telefonanruf zu einem Service Control Point (7) geschickt werden soll.

7. Verfahren nach dem vorhergehenden Anspruch, umfassend:
Abfangen von Events, welche durch den mobilen Abonnenten erzeugt werden;
Erkennen, wann der Anruf zu einer virtuellen privaten Nummer geleitet wird;
Vorbereiten und Schicken einer Signalmessage (2), welche die Nummer umfasst, zu der genannten Vermittlungseinheit (4).

8. Verfahren nach dem vorhergehenden Anspruch, **dadurch gekennzeichnet, dass** es nur ein Anruf zu einer virtuellen Nummer ist, wenn eine vordefinierte Anzahl Ziffern gewählt wird und/oder wenn ein bestimmtes Zahlenmuster gewählt wird.

9. Verfahren nach einem der vorhergehenden Ansprüche, **dadurch gekennzeichnet, dass** die temporäre Ortsinformation, die in der SIM-Karte (10) gespeichert wurde, vor dem Vorbereiten und Senden einer Signalmessage (2) zu der genannten Vermittlungseinheit (4) überprüft wird.

10. Verfahren nach dem vorhergehenden Anspruch, **dadurch gekennzeichnet, dass** die temporäre Ortsinformation überprüft wird, ob sie anzeigt, dass der mobile Abonnent mit einem öffentlichen Mobilfunknetz (PLMN) registriert ist, welches Service Switching Points (9) und eine kommerzielle Vereinbarung mit dem HPLMN des mobilen Abonnenten unterstützt.

11. Verfahren nach dem vorhergehenden Anspruch, **dadurch gekennzeichnet, dass** dieses genannte Mobilfunkgerät (1) die gewünschte Funktion bei Erhalt der genannten Signalmessage (8) durchführt.

12. Mittel zum Erzeugen einer intelligenten Netzwerkunterstützung für einen mobilen Abonnenten, der sich in einem fremden Mobilfunknetz (VPLMN) herumbewegt, welche Mittel Verarbeitungsmittel (4, 7), Mobilfunkmittel (1) für die Benutzung in dem genannten Mobilfunknetz (VPLMN) und eine SIM-Karte (10) umfasst, welche SIM-Karte (10) zusammen mit den Mobilfunkmitteln (1) zum Identifizieren des genannten mobilen Abonnenten benutzt werden kann, **dadurch gekennzeichnet,**
**dass** die Mobilfunkmittel (1) und/oder die SIM-Karte (10) Mittel zum Erkennen, wenn intelligente Netzwerkunterstützung angefordert wird, und in diesem Fall Mittel zum Vorbereiten und Senden einer Signalmessage (2) zu den Verarbeitungsmitteln (4, 7) enthalten;
**dass** die Verarbeitungsmittel (4,7) eine Vermittlungseinheit (4) zum Empfangen der genannten Signalmessage (2) enthalten, welche von den genannten Mobilfunkmitteln und/oder der genannten SIM-Karte gesendet wurde, zum Vorbereiten einer oder mehrerer Messages (5), welche Messages (5) auf der genannten, erhaltenen Signalmessage (2) basieren, zum Senden der genannten Messages (5) zum genannten Service Control Point (7) des Heimmobilfunknetzes (HPLMN) des mobilen Abonnenten, welche Service Control Point (7) mit einer Message (6) antwortet, welche Message (6) die angeforderte Information oder Service umfasst, zum Extrahieren der relevanten Information der genannten Message (6), die vom Service Control Point (7) erhalten wurde, und zum Senden der genannten Information über eine Signalmessage (8) zum genannten Mobilfunkgerät (1) und/oder zur genannten SIM-Karte (10).

13. Mittel nach Anspruch 12, wobei die genannten Signalmessages (2), die von den genannten Mobilfunkmitteln (1) und/oder durch die genannte SIM-Karte (10) gesendet wurden, und/oder die Signalmessages (8), zu den genannten Mobilfunkmitteln (1) und/oder zur genannten SIM-Karte (10) geschickt wurden, USSD-Messages und/oder SMS-Messages und/oder GPRS-Messages und/oder IP-Datenpakete sind.

14. Mittel nach einem der Ansprüche 12 oder 13, wobei die genannten Messages (5), die zu dem genannten Service Control Point (7) gesendet wurden, und/oder die genannten Messages (6), die vom genannten Service Control Point (7) erhalten wurden, INAP-Messages und/oder CORBA-Messages und/oder RMI-Messages und/oder http-Messages und/oder XML-Messages sind.

15. Mittel nach einem der Ansprüche 12 bis 14, wobei der genannte Service Control Point (7) und die genannte Vermittlungseinheit (4) auf dem gleichen Server sind.

16. Mittel nach einem der Ansprüche 12 bis 15, wobei die genannte Vermittlungseinheit (4) Mittel umfasst zum Erzeugen von Signalen zum genannten Service Control Point (7), welche anders sind als die durch den genannten mobilen Abonnenten oder das Netzwerk erzeugten Signale.

17. Mittel nach dem vorhergehenden Anspruch, **dadurch gekennzeichnet, dass** die genannte Vermittlungseinheit (4) Mittel umfasst zum Signalisieren der Beendigung eines Telefonanrufs des genannten mobilen Abonnenten zum genannten Service Control Point (7).

18. Mittel nach einem der Ansprüche 12 bis 17, wobei mindestens ein Teil der Service Switching Funktionen (SSF) in den Mobilfunkmitteln und/oder in der SIM-Karte (10) des mobilen Abonnenten durchgeführt wird.

19. Mittel nach dem vorhergehenden Anspruch, wobei der genannte Prozessor (100) und/oder die Mobilfunkmittel (1), die die Nummer abfangen, welche durch den mobilen Abonnenten gewählt wurde, erkennen, wann der Anruf zu einer virtuellen privaten Nummer geleitet wird, und dann eine Signalmessage (2) zu der genannten Vermittlungseinheit (4) schicken, welche Signalmessage (2) die Nummer umfasst.

20. Mittel nach dem vorhergehenden Anspruch, wobei der genannte Prozessor (100) und/oder die Mobilfunkmittel (1) erkennen, dass der Anruf zu einer virtuellen privaten Nummer geleitet wird, wenn nur eine begrenzte Anzahl Ziffern gewählt werden und/oder wenn ein bestimmtes Zahlenmuster gewählt wird.

21. Mittel nach einem der Ansprüche 12 bis 20, wobei eine genannte Signalmessage (2) mit der SIM-Karte (10) und/oder den Mobilfunkmitteln (1) nur vorbereitet und gesendet wird, falls das genannte fremde Mobilfunknetz (VPLMN) keine Service Switching Funktionen unterstützt.

22. Mittel nach dem vorhergehenden Anspruch, wobei eine genannte Signalmessage (2) für die genannte Vermittlungseinheit (4) mit der SIM-Karte (10) und/oder den Mobilfunkmitteln (1) nur vorbereitet und gesendet wird, falls die in der SIM-Karte (10) temporär gespeicherte Information bestimmten Kriterien genügt.

23. Mittel nach dem vorhergehenden Anspruch, wobei eine genannte Signalmessage (2) für die genannte Vermittlungseinheit (4) mit der SIM-Karte (10) und/oder den Mobilfunkmitteln (1) nicht vorbereitet und nicht gesendet wird, falls die temporäre Ortsinformation anzeigt, dass der mobile Abonnent bei seinem HPLMN registriert ist oder ein fremdes Mobilfunknetz (VPLMN) in einer Liste, welche in der genannten SIM-Karte (10) gespeichert ist, registriert ist.

24. Mittel nach dem vorhergehenden Anspruch, wobei die genannte Liste die Mobilfunknetzcodes von mindestens einem Teil aller Netzwerke, die Service Switching Funktionen (SSF) für den Benutzer der SIM-Karte (10) unterstützen, umfasst.

## Revendications

1. Procédé de fourniture d'un appui de réseau intelligent à un abonné mobile qui se déplace dans un VPLMN (visited public land (terrestre) mobile network (réseau) qui ne fournit pas de SSF (Service Switching Functions, fonctions de commutation de services) à cet abonné mobile, comprenant :
la reconnaissance, par la carte SIM (10) ou par une fonction située dans l'équipement mobile (1), de l'abonné mobile quand un appui de réseau intelligent est demandé ;
la préparation d'un message de signalisation (2) par la carte SIM (10) ou par une fonction située dans l'équipement mobile (1) de l'abonné mobile ;
l'envoi du message de signalisation (2) à une unité d'interfonctionnement (4) qui agit de concert avec un SCP (service control point) (7) du HPLMN (home public land mobile network, réseau mobile terrestre public (RMTP) de rattachement) de l'abonné mobile ;
la préparation d'un ou plusieurs messages (5) dans l'unité d'interfonctionnement (4), ces messages (5) dépendant du message de signalisation (2) reçu ;
l'envoi desdits messages (5) au SCP (7) mentionné,
ce SCP (7) répondant par un message (6) qui contient l'information ou le service demandés ;
l'unité d'interfonctionnement (4) extrayant l'information voulue du message (6) reçu du SCP (7), et
l'envoi de de l'information mentionnée, au moyen d'un message de signalisation (8), à l'équipement mobile (1) ou à la carte SIM (10), ou aux deux.

2. Procédé selon la première revendication, dans lequel les messages (5) préparés dans l'unité d'interfonctionnement (4) ou les messages (6) reçus du SCP (7), ou les uns et les autres, sont des messages INAP (intelligent network (réseau) application part) ou des messages CORBA, ou des messages RMI, ou des messages HTTP, ou des messages XML, ou une combinaison de ces catégories.

3. Procédé selon l'une des revendications précédentes, dans lequel les messages de signalisation (2) préparés par la carte SIM (10) ou par la fonction de l'équipement mobile (1) ou par les messages de signalisation (8) envoyés à l'équipement mobile (1) ou à la carte SIM (10) sont des messages USSD (unstructured supplementary services data (données)) ou des messages SMS (short (courts) message service) ou des message GPRS ou des paquets IP (Internet protocol), ou une combinaison quelconque de ces catégories.

4. Procédé selon l'une des revendications précédentes, **caractérisé en ce que** l'unité d'interfonctionnement (4) peut envoyer au SCP (7) des signaux l'informant d'autres évènements que les évènements engendrés par l'abonné mobile ou par le réseau.

5. Procédé selon la revendication précédente, **caractérisé en ce que** l'unité d'interfonctionnement (4) envoie au SCP (7) un signal indiquant qu'il est mis fin à une communication en provenance de l'abonné mobile.

6. Procédé selon l'une des revendications précédentes, avec lequel la carte SIM (10) ou l'équipement mobile (1) reconnaît les demandes d'établissement de communications qui doivent être dirigées vers un SCP (7).

7. Procédé selon la revendication précédente, comprenant :
l'interception d'évènements engendrés par l'abonné mobile ;
la reconnaissance des communications adressées à un numéro privé virtuel ;
la préparation et l'envoi d'un message de signalisation (2), contenant le numéro en question, à l'unité d'interfonctionnement (4).

8. Procédé selon la revendication précédente, **caractérisé par** la reconnaissance du fait que la communication est destinée à un numéro privé virtuel quand seulement un nombre déterminé de chiffres est composé ou quand un ensemble particulier de chiffres est composé, ou les deux.

9. Procédé selon l'une des revendications précédentes, **caractérisé par** le contrôle des renseignements sur l'emplacement temporaire qui sont enregistrés dans la carte SIM (10), avant la préparation et l'envoi d'un message de signalisation (2) à l'unité d'interfonctionnement (4).

10. Procédé selon la revendication précédente, **caractérisé par** le contrôle des renseignements sur l'emplacement temporaire pour savoir s'ils indiquent que l'abonné mobile est inscrit auprès d'un PLMN (public land mobile network, réseau mobile terrestre public) fournissant des SSP (service switching points, points de commutation du service) (9) et un accord commercial avec le HPLMN de l'abonné mobile.

11. Procédé selon l'une des revendications précédentes, **caractérisé en ce que** l'équipement mobile (1) exécute la fonction désirée quand il a reçu le message de signalisation (8).

12. Moyens de fourniture d'un appui de réseau intelligent à un abonné mobile qui se déplace dans un VPLMN (visited public land mobile network, réseau mobile terrestre public visité), ces moyens comprenant des moyens de traitement (4, 7), un équipement mobile destiné à l'utilisation dans ce VPLMN et une carte SIM (10) pouvant être utilisée avec l'équipement mobile (1) pour identifier l'abonné mobile, **caractérisés en ce que**
l'équipement mobile (1) ou la carte SIM (10), ou les deux, comportent des moyens permettant de reconnaître quand un appui de réseau intelligent est demandé et, dans ce cas, de préparer et d'envoyer un message de signalisation (2) aux moyens de traitement (4, 7) ;
les moyens de traitement (4, 7) comprennent une unité d'interfonctionne-ment (4) servant à recevoir le message de signalisation (2) envoyé par l'équipement mobile ou par la carte SIM (10), ou par les deux, pour préparer un ou plusieurs messages (5), messages (5) qui dépendent du message de signalisation (2) reçu, pour envoyer ces messages (5) à un SCP (service control point) (7) du HPLMN (home public land mobile network, réseau mobile terrestre public de rattachement) de l'abonné mobile, ce SCP (7) répondant par un message (6) contenant les renseignements ou le service demandés, pour extraire les renseignements voulus du message (6) reçu du SCP (7) et pour envoyer ces renseignements, au moyen d'un message de signalisation (8), à l'équipement mobile (1) ou à la carte SIM (10), ou aux deux.

13. Moyens selon la revendication 12, dans lesquels les messages de signalisation (2) envoyés par l'équipement mobile (1) ou par la carte SIM (10), ou par les deux, ou les messages de signalisation (8) envoyés à l'équipement mobile ou à la carte SIM (10), ou aux deux, ou les uns et les autres à la fois, sont des messages USSD (unstructured supplementary services data (données)) ou des messages SMS (short message service) ou des messages GPRS ou des paquets IP (Internet protocol), ou une combinaison quelconque d'entre eux.

14. Moyens selon la revendication 12 ou 13, avec lesquels les messages (5) envoyés au SCP (7) ou les messages (6) reçus du SCP (7), ou les uns et les autres, sont des messages INAP (intelligent network application part, partie application d'un réseau intelligent) ou des messages CORBA, ou des messages RMI, HTTP ou XML, ou les uns et les autres en combinaison quelconque.

15. Moyens selon l'une des revendications 12 à 14, avec lesquels le SCP (7) et l'unité d'interfonctionnement (4) sont sur le même serveur.

16. Moyens selon l'une des revendications 12 à 15, avec lesquels l'unité d'interfonctionnement (4) comprend des moyens servant à signaler au SCP (7) des évènements autres que ceux engendrés par l'abonné mobile ou le réseau.

17. Moyens selon la revendication précédente, **caractérisés en ce que** l'unité d'interfonctionnement (4) comprend des moyens servant à signaler au SCP (7) la fin d'une communication partie de l'abonné mobile.

18. Moyens selon l'une des revendications 12 à 17, avec lesquels au moins un sous-ensemble des fonctions de commutation de services (SSF, service switch functions) est exécuté dans l'équipement mobile (1) ou dans la carte SIM (10) de l'abonné mobile, ou dans les deux.

19. Moyens selon la revendication précédente, dans lesquels le processeur (100) ou l'équipement mobile (1), ou les deux, peuvent intercepter les chiffres d'appel choisis par l'abonné mobile, reconnaître les cas où l'appel est adressé à un VPN (virtual private number), et ensuite préparer et envoyer un message de signalisation (2) à l'unité d'interfonctionnement (4).

20. Moyens selon la revendication précédente, dans lesquels le processeur (100) ou l'équipement mobile (1), ou les deux, peuvent reconnaître que l'appel est adressé à un VPN quand seulement un nombre limité de chiffres a été composé ou quand des chiffres sont composés suivant un modèle particulier, ou les deux.

21. Moyens selon l'une des revendications 12 à 20, dans lesquels un message de signalisation (2) est préparé et envoyé par la carte SIM (10) ou par l'équipement mobile (1), ou par les deux, seulement si le VPLMN ne fournit pas la fonction de commutation de services qui est nécessaire.

22. Moyens selon la revendication précédente, dans lesquels un message de signalisation (2) est préparé et envoyé par la carte SIM (10) ou par l'équipement mobile (1), ou par les deux, à l'unité d'interfonctionnement (4), seulement si les informations sur l'emplacement temporaire stockées dans la carte SIM (10) correspondent à certains critères.

23. Moyens selon la revendication précédente, dans lesquels un message de signalisation (2) n'est ni préparé ni envoyé par la carte SIM (10) ou par l'équipement mobile (1), ou par les deux, à l'unité d'interfonctionnement (4), si les informations sur l'emplacement temporaire indiquent que l'abonné mobile est inscrit avec son HPLMN ou avec un VPLMN enregistré sur une liste mise en mémoire dans la carte SIM (10).

24. Moyens selon la revendication précédente, dans lesquels la liste contient les codes de réseaux mobiles d'au moins un sous-ensemble de tous les réseaux fournissant des fonctions de commutation de services à l'utilisateur de la carte SIM (10).
